# EUROPÄISCHE PATENTSCHRIFT

(11) **EP 0 953 746 B1**
(45) Veröffentlichungstag und Bekanntmachung des Hinweises auf die Patenterteilung: **14.01.2004**
(21) Anmeldenummer: 99103103.0
(22) Anmeldetag: 17.02.1999
(51) Int. Cl.: F02B 63/06, F02B 77/14

(54) **Antrieb von Lenkhilfpumpen**
Drive for power steering pumps
Entrainement des pompes pour la direction assistée

(30) Priorität: 30.04.1998 DE 19819309
(43) Veröffentlichungstag der Anmeldung: 03.11.1999
(73) Patentinhaber: MAN NUTZFAHRZEUGE AG, 80995 München (DE)
(72) Erfinder: Grumann, Bernd, Dipl.-Ing., 90579 Langenzenn (DE)

(56) Entgegenhaltungen:
- DE-A- 3 804 575
- US-A- 3 986 576
- US-A- 4 765 427

## Beschreibung

Die Erfindung bezieht sich auf den Antrieb einer Lenkhilfpumpe gemäß dem Gattungsbegriff des Patentanspruches.

Bei modernen Nutzfahrzeugen wird durch gestiegene Anforderungen an die Lenkung-beispielsweise gelenkte Hinterachsen bei Bussen - eine zweite Lenkhilfpumpe erforderlich. Eine erste Lenkhilfpumpe wird üblicherweise durch eine Luftpresserwelle angetrieben. Der hohe Drehmomentbedarf von Lenkhilfpumpen gestattet nicht den Anbau einer zweiten Lenkhilfpumpe und einer Kraftstofförderpumpe an die Luftpresserwelle. Für die zweite Lenkhilfpumpe und einer zur Lenkhilfpumpe in Reihe geschalteten Kraftstofförderpumpe wird daher ein weiterer Antrieb erforderlich, was mit hohem baulichen Aufwand und daraus resultierenden Kosten verbunden ist.

Der Erfindung liegt die Aufgabe zugrunde, den Antrieb, insbesondere der Lenkhilfpumpe, mit geringem baulichen Aufwand zu bewerkstelligen.

Gelöst wird diese Aufgabe durch die kennzeichnenden Merkmale des Patentanspruches.

Bei Anwendung des Common Rail-Einspritzsystems kann die zweite Lenkhilfpumpe von dem Ausgang der Welle der Hochdruck-Einspritzpumpe angetrieben werden, so daß für die zweite Lenkhilfpumpe ein eigener Antrieb entfällt. Die Kraftstofförderpumpe wiederum kann, wie bekannt, dieser Lenkhilfpumpe in Reihe nachgeschaltet werden, da der Drehmomentbedarf der Kraftstofförderpumpe vergleichsweise gering ist. Erfindungsgemäß wird also zunächst von der Ausgangsseite der Hochdruckeinspritzpumpe ausgehend die zweite Lenkhilfpumpe angetrieben, da diese ein entsprechend hohes Drehmoment aufnimmt. Dieser zweiten Lenkhilfpumpe in Reihe nachgeschaltet erfolgt der Antrieb der Kraftstofförderpumpe. Diese Reihenschaltung des Antriebs, ausgehend von der Hochdruckpumpe über zweite Lenkhilfpumpe zur Kraftstofförderpumpe erfordert minimalen baulichen Aufwand und ist als sehr kostengünstig anzusehen, was bei einem Massenartikel, wie ihn Nutzfahrzeuge darstellen, von entscheidender Bedeutung für das Gesamtprodukt ist.

Dadurch, daß die Hochdruck-Einspritzpumpe mit höherer Drehzahl als die Luftpresserwelle angetrieben wird kann die zweite Lenkhilfpumpe darüber hinaus auch noch kleiner ausgeführt werden, wodurch zusätzlich an Baumaterial und Bauraum eingespart wird.

## Patentansprüche

1. Antrieb von Lenkhilfpumpen bei Brennkraftmaschinen für Nutzfahrzeuge, bei denen zwei Lenkhilfpumpen vorgesehen sind. wobei eine erste Lenkhilfpumpe von einer Luftpresserwelle angetrieben wird und eine zweite Lenkhilfpumpe mit einer in Reihe nachgeschalteten Kraftstofförderpumpe über einen weiteren Antrieb verfügt, **dadurch gekennzeichnet, daß** dieser Antrieb durch eine Hochdruckpumpe eines Common Rail-Einspritzsystems erfolgt und daß dabei der Ausgang der Hochdruckpumpe mit dem Eingang der Lenkhilfpumpe verbunden ist

## Claims

1. A drive of power-steering pumps in internal-combustion engines for utility vehicles, in which two power-steering pumps are provided, wherein a first power-steering pump is driven by an air-compressor shaft and a second power-steering pump with a fuel-supply pump arranged downstream and in line is provided with a further drive, **characterized in that** the said drive is effected by a high-pressure pump of a common-rail injection system, and the output of the high-pressure pump is connected to the input of the power-steering pump.

## Revendications

1. Entraînement de pompes pour la direction assistée dans des moteurs à combustion interne pour des véhicules utilitaires, dans lesquels il est prévu deux pompes pour la direction assistée, dans lequel une première pompe de direction assistée est entrainée par un arbre de compresseur d'air et une seconde pompe de direction assistée dispose d'un autre entraînement avec une pompe d'alimentation en carburant montée en série à la suite,
**caractérisé en ce que**
cet entraînement est effectué par une pompe à haute pression d'un système d'injection à rampe commune et **en ce que** la sortie de la pompe à haute pression est en l'occurrence reliée à l'entrée de la pompe de direction assistée.
